# EUROPEAN PATENT SPECIFICATION

(11) **EP 1 210 780 B1**
(45) Date of publication and mention of the grant of the patent: **03.11.2004**
(21) Application number: 00953087.4
(22) Date of filing: 24.07.2000
(51) Int. Cl.: H04B 7/26, H04J 3/06

(54) **METHOD AND SYSTEM TO SYNCHRONIZE MOBILE UNITS TO A BASE TRANSCEIVER STATION**
SYSTEM UND VERFAHREN ZUR SYNCHRONISATION VON MOBILEINHEITEN MIT EINER BASISSTATION
PROCEDE ET SYSTEME PERMETTANT LA SYNCHRONISATION D'UNITES MOBILES AVEC UNE STATION EMETTRICE-RECEPTRICE DE BASE

(30) Priority: 27.08.1999 IT MI991845
(43) Date of publication of application: 05.06.2002
(73) Proprietor: Siemens Mobile Communications S.p.A., 20126 Milano (IT)
(72) Inventor: DE ANGELI, Alfonso, I-20010 Cornaredo (IT); DE BENEDITTIS, Rossella, I-20020 Barbaiana di Lainate (IT); MARNONI, Luca, I-21047 Saronno (IT)
(74) Representative: Giustini, Delio
(86) International application number: PCT/EP2000/007120
(87) International publication number: WO 2001/017137

(56) References cited:
- GB-A- 2 098 834
- US-A- 5 930 366
- DAHLMAN E ET AL: "UMTS/IMT-2000 BASED ON WIDEBAND CDMA" IEEE COMMUNICATIONS MAGAZINE,IEEE SERVICE CENTER. PISCATAWAY, N.J,US, vol. 36, no. 9, 1 September 1998 (1998-09-01), pages 70-80, XP000784828 ISSN: 0163-6804
- EUROPEAN TELECOMMUNICATIONS STANDARD INSTITUTE (ETSI): "Universal Mobile Telcommunications System (UMTS);UMTS Terrestrial Radio Access (UTRA); Concept evaluation (UMTS 30.06 version 3.0.0)" ETSI, December 1997 (1997-12), XP002131074
- ZHANG PING ET AL: "Studies on wideband CDMA system" ICCT'98. 1998 INTERNATIONAL CONFERENCE ON COMMUNICATION TECHNOLOGY. PROCEEDINGS (IEEE CAT. NO.98EX243), ICCT'98. 1998 INTERNATIONAL CONFERENCE ON COMMUNICATION TECHNOLOGY. PROCEEDINGS, BEIJING, CHINA, 22-24 OCT. 1998, pages 484-489 vol.1, XP002153484 1998, Beijing, China, Publising House of Constr. Mater, China ISBN: 7-80090-827-5

## Description

### Field of the Invention

The present invention relates to a method to synchronize mobile units to base transceiver stations in digital telecommunication networks, in particular with time division duplex access (TDD), such as for instance mobile telecommunication networks belonging to the UMTS standard *(Universal Mobile Telecommunication System),* both in the TDD-CDMA version *(Time Division Duplex- Code Division Multiple Access)* proposed by the 3GPP organization *(3*^{*rd*} *Generation Partnership Project)* and in the TD-SCDMA version *(Time Division - Synchronous Code Division Multiple Access)* proposed by the CWTS organization *(Chinese Wireless Telecommunication Standards).* The present invention relates also to a system implementing this method.

It is known that in mobile telecommunication networks with TDD access the transmission and reception of radio signals from and to the base stations, called BS in UMTS environment, do not occur at the same time, but are alternated in a continuous sequence of periods having predefined duration, each one of them, called *frame,* is conveniently coded and identified by the system. For instance, the UMTS base transceiver stations generally transmit the signals to the mobile units, called UE *(User Equipment),* in the first half of the frame or semi-frame *(downlink* procedure), and receive in the second half frame the signals transmitted by the user equipment itself *(uplink* procedure). In particular, each frame lasts 10 ms, subdivided into a plurality of time intervals *(timeslots),* they too having predefined duration, while the two semi-frames can have equal or different duration.

Inside each timeslot the reception/transmission of the useful signal occurs according to the time division access technique called TDMA *(Time Division Multiple Access).* Moreover, in each timeslot a plurality of signals can be code division multiplexed according to the CDMA access technique *(Code Division Multiple Access),* so that each radio channel is defined by a particular timeslot and one or more particular access codes.

It is therefore clear that to avoid dangerous interference between the base transceiver stations and user equipments and/or to optimize the communication transfer from a base station to another one, according to a procedure called *handover,* it is necessary that frames are synchronized among them, in order to be able to separate the transmission and reception periods of user equipment from those of base stations and vice versa. Moreover, it is convenient that also the sequences of digital codes associated to each frame, which are cyclically repeated in time, match during the communications, in order to be able to speed up the above mentioned *handover* procedure in the user equipment. This last synchronization type is called *multiframe synchronization.* An additional synchronization level, called *superframe,* consists in the numbering of multiframes through sequences which are cyclically repeated in time.

### Background art

The GSM specification No.05.02 version 6.5.0. release 1997: "Digital cellular Telecommunications system (Phase 2+); Multiplexing and multiple access on the Radio path", includes a paragraph 5.5 titled - Timeslot and TDMA frame sequence - which explains that through the hierarchical subdivision of superframes into multiframes and frames, it is possible to define a plurality of service channels whose collocation inside a particular multiframe and/or superframe is known in advance. Testually: "A given physical channel shall always use the same timeslot number in every TDMA frame. Therefore a timeslot sequence is defined by: i) a timeslot number (TN); and ii) a TDMA frame number sequence. The detailed definitions of TDMA frame number sequences are given in clause 7 (Table). The physical channels where the TDMA frame number sequence is 0,1, ....., FN_MAX are called basic physical channels".

Latest UMTS systems with a TDMA structure advantageously inherit a great deal of the preceding GSM channel allocation opportunities; the following EUROPEAN TELECOMMUNICATIONS STANDARD INSTITUTE (ETSI) specification: "Universal Mobile Telecommunications System (UMTS); UMTS Terrestrial Radio Access (UTRA); Concept evaluation (UMTS 30.06 version 3.0.0)' ETSI, December 1997 (1997-12), XP002131074, regards synchronization matter. In particular, Fig.7 shows the slot/frame/multiframe architecture of the physical channels, Fig.8 the structure of the synchronization channel, and Fig.9 the time multiplexing of the synchronization channel with the other downlink physical channels. With reference to the latter citation, to allow the user equipments to synchronize, the base transceiver stations transmit a synchronization signal in a particular channel called SCH (or SYNC in CWTS environment), which is coded in a different manner from the other channels, superimposing to them in a non-orthogonal mode. In this way the user equipment can easily distinguish the synchronization channel from the remaining channels even in noisy electromagnetic environment. In the cited UMTS 30.06 the SCH channel consists of two sub-channels, the Primary SCH and the Secondary SCH transmitted each timeslot (Fig.8). While the Primary SCH consists of unmodulated orthogonal Gold code, the synchronization signal of the Secondary SCH includes a sequence of 256 modulation elementary units, called *chips,* showing best self-correlation and cross-correlation properties in order to be easily identified by user equipment. This sequence allows to identify the group of codes of the specific base transceiver station, as well as the position in the frame, that is the timeslot and the access codes, of a particular service channel called *broadcast* or CCPCH *(Common Control Physical Channel).* This service channel contains the system messages necessary to the user equipment to have access to network services, such as for instance the operator and cell identifiers, the type of services available, the incoming call *(paging)* and other messages. The SYNC channel used in the TD-SCDMA system allows to identify the group of codes of the specific base transceiver station, as well as the timeslot and the access codes of the CCPCH channel, similarly.

A panoramic view since the first generation mobile communications to nowadays is provided in the article of Erik Dahlman, Björn Gudmundson, Mats Nilsson, and Johan Sköld, titled: "UMTS/IMT-2000 Based on Wideband CDMA", published by IEEE Service Center, Psicataway, N.J, US, vol. 36, no. 9, 1 September 1998 (1998-09-01), pages 70-80, XP000784828 ISSN: 0163-6804. W-CDMA is based on DS-CDMA *(Direct Sequences CDMA)* technique which has gradually evolved including a TDMA component either of FDD *(Frequency Division Duplex)* or TDD mode. The paragraph titled "The W-CDMA RLC/MAC Layer" and the relative Figures 14 to 17 of this article are focussed on the Radio Link Control (RLC) and Medium Access Control (MAC) protocol layers, which are together responsible for efficiently transferring data of both real-time and non-real-time services. As explicitly recognized in the article, the data flow of the W-CDMA system is very similar to the data flow of General Packet Radio Service (GPRS), which is the packet data service tool of the GSM. Considering the limited capacity of each radio channel, the system messages shall be often subdivided into several segments or *bursts* that are transmitted in more time multiplexing consecutive frames. This means that for a correct reconstruction of the message, the user equipment have to assemble the different segments received, recomposing the same in accordance with the transmission order. Since the service channel can transmit different types of system messages, it is necessary to identify the type of each message in order that the user equipment can perform the correct decoding and possibly reject in advance the messages considered not interesting. Fig.14 of the cited article shows that each transport block, namely a RLC-Protocol Data Unit (RLC-PDU), includes a Header which allows the identification of the type of system message transmitted by a base station.

### Defects of the background art

The identification of the type of system message transmitted by a base station performed by adding a header to each RLC-PDU data block reduces the neat capacity of the transmission channel.

The identification of the type of system message transmitted by a base station can be also performed by associating the type of message to the frame number where it is placed. This second identification mode is disclosed in the further telecommunication standard: "Digital cellular Telecommunications system (Phase 2+); Mobile radio interface layer 3 specification, (GSM 04.08 version 6.4.2. release 1997)"; with particular reference to the paragraph 10.5.2 "Radio Resource management information elements", whose sub-paragraph 10.5.2.37a: "SI 9 Rest Octets" recites testually: "The SI 9 Rest Octets information element contains information about scheduling of some or all of the information on the BCCH. Precisely, messages of the given information type are sent in the multiframes for which: [(frame number) DIV 51) mod (M)) = P]. This alternative identification mode has the drawback of requiring to unprofitably code in permanent manner the time multiplexing of the messages in the multiframe.

### Scope and summary of the Invention

Scope of the present invention is therefore that to indicate a method and a synchronization system, free from the above mentioned drawbacks. Said scope is attained with a method and a system whose main characteristics are specified in claims 1 and 11, respectively, while other characteristics are specified in the appended claims.

Thanks to the marking of the synchronization signal and to the transmission of a particular pointer message, both executed by the base transceiver station, the method according to the present invention allows to reduce the power consumption of the user equipment, since it is possible to optimize the listening time of system messages avoiding the examination of the messages considered not interesting by the user equipment.

A further advantage of the method according to the present invention consists in optimizing not only the listening times, but also the transmission capacity of system messages, since it is possible to mark the messages in the service channel without transmitting headers which would reduce the transmission capacity.

An additional advantage of the method according to the present invention is represented by the possibility to extend or increase the kinds of system messages without modifying the structure of the physical channels, as well as by the robustness due to the use of the synchronization physical channel to point to a logic channel which in turn points to other logic channels, thus availing of the easy reception of the synchronization channel itself.

According to a particular aspect of the method of the present invention, the marking of the synchronization signal transmitted by a base transceiver station can be used also to synchronize in multiframes other base transceiver stations capable of directly receiving said signal.

According to another particular aspect of the method of the present invention, the marking of the synchronization signal by the base transceiver station includes one or more consecutive polarity inversions of the relevant modulation elementary units. In this way, the best self-correlation and cross-correlation properties of the synchronization signal are not decreased, thus maintaining its easy reception unchanged, particularly in noisy electromagnetic environments.

Moreover, the method according to the present invention can be easily implemented with least modifications to the known telecommunication systems, since the implementation of the relevant operational steps in the base transceiver stations and in user equipment requires only *software* but not *hardware* modifications.

### Brief description of the drawings

The present invention together with further advantages and characteristics thereof may be understood by those skilled in the art making reference to the following detailed description taken in conjunction with the accompanying drawings in which:
- figure 1 shows a partial diagram of the structure of radio channels in a first embodiment of the method according to the present invention; and
- figure 2 shows a partial diagram of the structure of radio channels in a second embodiment of the method according to the present invention.

### Detailed description of some preferred embodiments of the invention

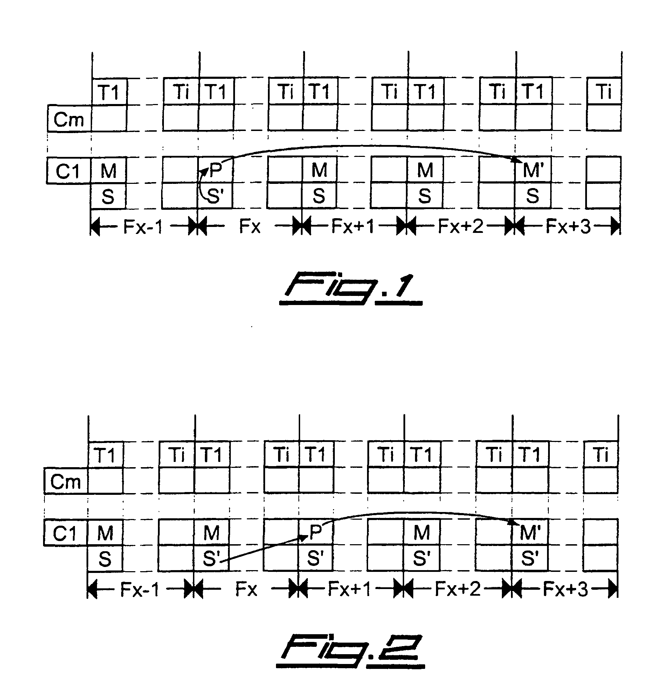

With reference to figure 1, we can notice that in a first embodiment of the method according to the present invention at least one base station transmits the radio signals that can be received by one or more user equipment in the known manner, and vice versa. Said signals are subdivided into a plurality of frames Fn, for instance Fx-1, Fx, Fx+1, Fx+2, Fx+3, in their turn subdivided into a plurality of timeslots Tn, for instance from T1 to Ti, and into a plurality of access codes Cn, for instance from C1 to Cm. Furthermore, the base transceiver stations transmit a synchronization signal S in a coded channel in a manner different from the other channels, for instance phase modulating the radio carrier according to the BPSK technique *(Binary Phase Shift Keying).*

This synchronization signal S includes in the known way a sequence of modulation elementary units, enabling to identify the group of codes of the specific base transceiver station, as well as the timeslot and access codes, for instance the timeslot T1 and code C1 of the service channel containing the system messages M necessary to the user equipment to have access to network services. To obtain the content of messages M, often subdivided into segments transmitted in more consecutive frames, the user equipment receive and decode the signal S.

In the first embodiment of the method according to the present invention, the base station conveniently modifies the sequence of modulation elementary units of the synchronization signal S in a frame Fn, for instance in the frame Fx, to the purpose of signaling to user equipment the presence of a particular pointer message P in the service channel of the same frame or of a subsequent frame whose position is known in advance.

The pointer message P, which preferably occupies one sole frame to speed up the acquisition time, contains in its turn the frame synchronism of higher hierarchical order, that is the information relevant to the multiframe and possibly to the superframe. This information enables to know when the first segment of a new system message starts and therefore determine the position, for instance in the frame Fx+3, of a particular system message M', which in its turn can be subdivided into more consecutive frames. The user equipments, on reception of the synchronization signal S' marked by the modified sequence of modulation elementary units, decode the pointer message P and possibly examine, whether interesting, the system message M' pointed by the pointer message P.

In particular, in the present embodiment the marking of the sequence of modulation elementary units is obtained modulating the sequence of signal S with logic coefficient -1, that is, inverting its polarity. The detection of polarity of the sequence marked S' in the synchronization channel can coherently occur, averaging the polarities of more subsequent frames to reduce possible errors, or incoherently, making a difference between the polarities of two subsequent frames.

With reference to figure 2, we see that a second embodiment of the method according to the present invention differs from the first embodiment in that the synchronization signal marked S' indicates to the user equipments the presence of the pointer message P in the service channel of a frame Fx+n following the one where the signal marked S' is present (in the example n = 1). In the following frame Fx+n+1, this signal, instead of returning to the original state S, for instance at non inverted polarity, remains in the modified state S' until it is necessary to indicate the presence of another pointer message P. Therefore, in the present embodiment, the presence of pointer messages P is indicated by the base station to the user equipments through a transition of the status of the synchronization signal. In the figures, arrows indicate the pointing from signals marked S' to pointer messages P, as well as from pointer messages P to the first segment of the new system messages M'.

In another embodiment of the method according to the present invention the marking of the synchronization signal S by the base transceiver station occurs with multiple periodicity versus its own multiframe period. In this way, the marking of the synchronization signal transmitted by a base transceiver station can be used also to synchronize in multiframe other base transceiver stations capable of directly receiving said signal.

The method according to the present invention can also be applied to the particular mechanism of system messages transmission on the service channel, which has been proposed in the 3GPP. In said field, system messages are sent in blocks that can have each, different characteristics, such as for instance the repetition speed. Among said block, a *master* block is defined, listing and describing all the blocks currently in use in the base station, and gives also a method to determine when any information is updated. The marking of the synchronization signal S and the transmission of the pointer message P could, in this case, enable the user equipments to quickly identify the *master* block and consequently perform an effective acquisition of all the necessary system information.

## Claims

1. Method to synchronize at least a user equipment to at least one base transceiver station belonging to a digital telecommunication network, in which radio signals transmitted and received by said base station are subdivided into multiframes and frames (Fx-1, Fx, Fx+1, ...) having predefined duration and each frame is subdivided into a predefined number of timeslots (T1, ..., Ti) and codes (C1, ..., Cm), said signals including at least a synchronization signal (S), which is transmitted by the base transceiver station and contains a modulation elementary units sequence suitable to identify the timeslot (T1) and the code (C1) of a service channel containing system messages (M), **characterized in that** it includes the following operational steps:
• marking the synchronization signal (S) in at least one frame (Fx) for indicating to the user equipment the presence of a pointer message (P) in the service channel of the same frame (Fx), or of a subsequent frame whose position (Fx+1) in the multiframe is known in advance, by the base transceiver station;
• transmitting the pointer message (P) in the service channel of the same frame (Fx), or the said subsequent frame, by the base transceiver station;
• detecting the marked synchronization signal (S') by the user equipment;
• receiving the pointer message (P) indicated by the detected synchronization signal (S'), by the user equipment;
• decoding the pointer message (P) for extracting at least the frame number of the beginning of a desired system message (M'), by the user equipment.

2. Method according to the previous claim, **characterized in that** the marking of the synchronization signal (S) by the base transceiver station includes at least a polarity inversion of the relative modulation elementary units.

3. Method according to the previous claim, **characterized in that** the marking of the synchronization signal (S) by the base transceiver station includes two polarity inversions of the relative modulation elementary units in two consecutive frames (Fx, Fx+1).

4. Method according to the previous claim, **characterized in that** the marking of the synchronization signal (S) by the base transceiver station includes more polarity inversions of the relative modulation elementary units in as many consecutive frames (Fx, Fx+1, ... ), and the detection of the marked synchronization signal (S') includes coherent polarity detection averaging the polarities of more subsequent frames to reduce possible errors.

5. Method according to the previous claim, **characterized in that** the marking of the synchronization signal (S) by the base transceiver station includes more polarity inversions of the relative modulation elementary units in as many consecutive frames (Fx, Fx+1, ... ), and the detection of the marked synchronization signal (S') includes incoherent polarity detection making a difference between the polarities of two subsequent frames.

6. Method according to one of the previous claims, **characterized in that** the pointer message occupies one sole frame.

7. Method according to one of the previous claims, **characterized in that** said radio signals further includes superframes and the marking of the synchronization signal (S) by the base transceiver station takes place with periodicity multiple of its own multiframe period.

8. Method according to the previous claim, **characterized in that** the decoding of the pointer message (P) provides the multiframe number of the beginning of the interesting system message (M').

9. Method according to claim 1 or 2, **characterized in that** the marked synchronization signal (S') remains in the marked state until it is necessary to indicate the presence of another pointer message (P) and the user equipment detects the state transitions of the marked synchronization signal (S').

10. Method according to one of the preceding claims, **characterized in that** the system messages (M) are sent in blocks including a master block listing and describing all the blocks currently in use in the base transceiver station, and the pointer message (P) points to the beginning of said master block.

11. System to synchronize at least one user equipment to at least one base transceiver station belonging to a digital telecommunication network, in which radio signals transmitted and received from said base station are subdivided into multiframes and frames (Fx-1, Fx, Fx+1, ...) )having predefined duration and each frame is subdivided in a predefined number of timeslots (T1, ..., Ti) and codes (C1, ..., Cm), said signals including at least a synchronization signal (S) which is transmitted by the base transceiver station and includes a sequence of modulation elementary units suitable to identify the timeslot (T1) and the code (C1) of a service channel containing system messages (M), **characterized in that** the at least a base transceiver station includes means adapted:
• to mark the synchronization signal (S) in at least one frame (Fx) for indicating to the user equipment the presence of a pointer message (P) in the service channel of the same frame (Fx), or of a subsequent frame whose position (Fx+1) inside the multiframe is known in advance;
• to transmit the pointer message (P) in the service channel of the same frame (Fx), or the said subsequent frame;
and the at least one user equipment includes means adapted:
• to detect the marked synchronization signal (S');
• to receive the pointer message (P) indicated by the detected synchronization signal (S');
• to decode the pointer message (P) for extracting at least the frame number of the beginning of a desired system message (M').
to mark the synchronization signal (S) in at least one frame (Fx), and
to transmit a pointer message (P) in the service channel of this frame (Fx) or of a subsequent frame (Fx+n).

12. System according to the preceding claim, **characterized in that** it includes an additional base transceiver station adapted to detect the marked synchronization signal (S'), and synchronize in multiframe with said first base transceiver station through such marked synchronization signal (S').

## Patentansprüche

1. Methode zum Synchronisieren von mindestens einem Benutzergerät mit mindestens einer Sende-Empfänger-Basisstation, die zu einem digitalen Fernmeldenetz gehört, in dem Funksignale, die von genannter Basisstation übertragen und empfangen werden, in Multirahmen und Rahmen (Fx-1, Fx, Fx+1, ...) unterteilt sind, die eine vordefinierte Dauer haben und jeder Rahmen unterteilt ist in eine vordefinierte Anzahl von Zeitschlitzen (T1, ..., Ti) und Codes (C1, ..., Cm), wobei genannte Signale mindestens ein Synchronisierungszeichen (S) enthalten, welches von der Sende-Empfänger-Basisstation gesendet wird und eine Sequenz von elementaren Modulationseinheiten enthält, die zum Identifizieren des Zeitschlitzes (T1) und des Codes (C1) eines Service-Kanals dient, der Systemmeldungen (M) enthält, **dadurch gekennzeichnet, daß** sie die folgenden Funktionsschritte umfaßt:
• das Kennzeichnen durch die Sende-Empfänger-Basisstation des Synchronisierungszeichens (S) in mindestens einem Rahmen (Fx), um dem Benutzergerät das Vorhandensein einer Pointer-Meldung (P) im Service-Kanal desselben Rahmens (Fx) oder eines nachfolgenden Rahmens zu signalisieren, dessen Position (Fx+1) im Multirahmen zuvor bekannt ist;
• das Senden durch die Sende-Empfänger-Basisstation der Pointer-Meldung (P) im Service-Kanal desselben Rahmens (Fx) oder des genannten nachfolgenden Rahmens;
• das Ermitteln des gekennzeichneten Synchronisierungszeichens (S') durch das Benutzergerät;
• das Empfangen der Pointer-Meldung (P), die durch das ermittelte Synchronisierungszeichen (S') signalisiert wird, durch das Benutzergerät;
• das Entschlüsseln der Pointer-Meldung (P) zum Extrahieren von mindestens der Rahmen-Nummer am Anfang einer gewünschten Systemmeldung (M'), durch das Benutzergerät.

2. Methode gemäß vorausgehendem Anspruch, **dadurch gekennzeichnet, daß** das Kennzeichnen des Synchronisierungszeichens (S) durch die Sende-Empfänger-Basisstation mindestens eine Umpolung der jeweiligen elementaren Modulationseinheiten umfaßt.

3. Methode gemäß vorausgehendem Anspruch, **dadurch gekennzeichnet, daß** das Kennzeichnen des Synchronisierungszeichens (S) durch die Sende-Empfänger-Basisstation zwei Umpolungen der jeweiligen elementaren Modulationseinheiten in zwei aufeinanderfolgenden Rahmen (Fx, Fx+1) umfaßt.

4. Methode gemäß vorausgehendem Anspruch, **dadurch gekennzeichnet, daß** das Kennzeichnen des Synchronisierungszeichens (S) durch die Sende-Empfänger-Basisstation mehrere Umpolungen der jeweiligen elementaren Modulationseinheiten in ebensovielen aufeinanderfolgenden Rahmen (Fx, Fx+1, ... ) umfaßt, und daß die Ermittlung des gekennzeichneten Synchronisierungszeichens (S') die kohärente Polaritätsermittlung umfaßt, indem der Durchschnitt der Polaritäten mehrerer nachfolgender Rahmen genommen wird, um mögliche Fehler zu reduzieren.

5. Methode gemäß vorausgehendem Anspruch, **dadurch gekennzeichnet, daß** das Kennzeichnen des Synchronisierungszeichens (S) durch die Sende-Empfänger-Basisstation mehrere Umpolungen der jeweiligen elementaren Modulationseinheiten in ebensovielen aufeinanderfolgenden Rahmen (Fx, Fx+1, ... ) umfaßt, und das Ermitteln des gekennzeichneten Synchronisierungszeichens (S') die inkohärente Polaritätsermittlung umfaßt, indem ein Unterschied zwischen den Polaritäten von zwei nachfolgenden Rahmen gemacht wird.

6. Methode gemäß einem der vorausgehenden Ansprüche, **dadurch gekennzeichnet, daß** die Pointer-Meldung nur einen Rahmen belegt.

7. Methode gemäß einem der vorausgehenden Ansprüche, **dadurch gekennzeichnet, daß** genannte Funksignale außerdem Superrahmen beinhalten und daß das Kennzeichnen des Synchronisierungszeichens (S) durch die Sende-Empfänger-Basisstation mit einer Periodizität stattfindet, die ein Vielfaches ihrer eigenen Multirahmen-Periode ist.

8. Methode gemäß vorausgehendem Anspruch, **dadurch gekennzeichnet, daß** das Entschlüsseln der Pointer-Meldung (P) die Multirahmen-Nummer vom Anfang der betreffenden Systemmeldung (M') liefert.

9. Methode gemäß Anspruch 1 oder 2, **dadurch gekennzeichnet, daß** das gekennzeichnete Synchronisierungszeichen (S') in gekennzeichnetem Zustand verbleibt, bis es erforderlich ist, das Vorhandensein einer anderen Pointer-Meldung (P) zu signalisieren und daß das Benutzergerät den Zustandsübergang des gekennzeichneten Synchronisierungszeichens (S') ermittelt.

10. Methode gemäß einem der vorausgehenden Ansprüche, **dadurch gekennzeichnet, daß** die Systemmeldungen (M) in Blöcken gesendet werden, einschließlich einer Hauptblockliste und Beschreibung aller Blöcke, die gegenwärtig in der Sende-Empfänger-Basisstation benutzt werden, und daß die Pointer-Meldung (P) auf den Anfang des genannten Hauptblocks hinweist.

11. System zum Synchronisieren von mindestens einem Benutzergerät mit mindestens einer Sende-Empfänger-Basisstation, die zu einem digitalen Fernmeldenetz gehört, in welchem Funksignale, die von genannter Basisstation übertragen und empfangen werden, in Multirahmen und Rahmen (Fx-1, Fx, Fx+1, ...) unterteilt sind, die eine vordefinierte Dauer haben und jeder Rahmen in eine vordefinierte Anzahl von Zeitschlitzen (T1, ..., Ti) und Codes (C1, ..., Cm) unterteilt ist, wobei genannte Signale mindestens ein Synchronisierungszeichen (S) enthalten, das durch die Sende-Empfänger-Basisstation gesendet wird und eine Sequenz von elementaren Modulationseinheiten umfaßt, die zum Identifizieren des Zeitschlitzes (T1) und des Codes (C1) eines Service-Kanals dient und Systemmeldungen (M) enthält, **dadurch gekennzeichnet, daß** mindestens eine Sende-Empfänger-Basisstation Mittel enthält, die in der Lage sind:
• das Synchronisierungszeichen (S) in mindestens einem Rahmen (Fx) zu kennzeichnen, um dem Benutzergerät das Vorhandensein einer Pointer-Meldung (P) im Service-Kanal desselben Rahmens (Fx) zu signalisieren, oder eines nachfolgenden Rahmens, dessen Position (Fx+1) innerhalb des Multirahmens im voraus bekannt ist;
• die Pointer-Meldung (P) im Service-Kanal desselben Rahmens (Fx) oder des genannten nachfolgenden Rahmens zu übertragen;
und mindestens ein Benutzergerät Mittel enthält, die in der Lage sind:
• das gekennzeichnete Synchronisierungszeichen (S') zu erfassen;
• die Pointer-Meldung (P) zu erhalten, die durch das erfaßte Synchronisierungszeichen (S') signalisiert wird;
• die Pointer-Meldung (P) zu entschlüsseln, um mindestens die Rahmen-Nummer des Anfangs der gewünschten Systemmeldung (M') zu extrahieren.
das Synchronisierungszeichen (S) in mindestens einem Rahmen (Fx) zu kennzeichnen, und
eine Pointer-Meldung (P) im Service-Kanal dieses Rahmens (Fx) oder eines nachfolgenden Rahmens (Fx+n) zu übertragen.

12. System gemäß vorausgehendem Anspruch, **dadurch gekennzeichnet, daß** es eine zusätzliche Sende-Empfänger-Basisstation umfaßt, die in der Lage ist, das gekennzeichnete Synchronisierungszeichen (S') zu ermitteln, und in Multirahmen mit genannter erster Sende-Empfänger-Basisstation durch dieses gekennzeichnete Synchronisierungszeichen (S') zu synchronisieren.

## Revendications

1. La méthode de synchronisation entre au-moins un équipement utilisateur et au-moins une station émettrice-réceptrice de base appartenant à un réseau de télécommunication digitale dans lequel les signaux radio transmis et captés par ladite station de base sont subdivisés en multitrames et trames (Fx-1, Fx, Fx+1, ...) à durée préalablement déterminée et chaque trame est subdivisée en un nombre préalablement défini d'intervalles de temps (T1, ..., Ti) et de codes (C1, ..., Cm) ; lesdits signaux comprennent au-moins un signal de synchronisation (S) qui est transmis par la station émettrice-réceptrice de base et comporte une séquence de modulation des unités élémentaires appropriée pour identifier l'intervalle de temps (T1) et le code (C1) d'un canal de service contenant des messages de système (M) **caractérisée par le fait qu'**elle comprend les étapes de fonctionnement suivantes:
• le marquage du signal de synchronisation (S) dans au moins une trame (Fx) pour indiquer à l'équipement utilisateur la présence d'un message de pointeur (P) dans le canal de service de la même trame (Fx) ou d'une trame successive dont la position (Fx+1) dans la multitrame est connue à l'avance par la station émettrice-réceptrice de base;
• la transmission du message de pointeur (P) dans le canal de service de la même trame (Fx) ou de ladite trame postérieure, par la station émettrice-réceptrice de base;
• la détection par l'équipement utilisateur du signal de synchronisation marqué (S);
• le captage, par l'équipement utilisateur, du message de pointeur (P) indiqué par le signal de synchronisation détecté (S');
• le décodage, par l'équipement utilisateur, du message de pointeur (P) pour extraire au moins le numéro de la trame du début d'un message de système (M') voulu.

2. La méthode, selon la requête précédente, **caractérisée par le fait que** le marquage du signal de synchronisation (S) par la station émettrice-réceptrice de base comprend au moins une inversion de polarité des unités élémentaires de modulation correspondantes.

3. La méthode selon la requête précédente **caractérisée par le fait que** le marquage du signal de synchronisation (S) par la station émettrice-réceptrice de base comporte deux inversions de polarité des unités élémentaires correspondantes dans les deux trames consécutives (Fx, Fx+1).

4. La méthode selon la requête précédente, **caractérisée par le fait que** le marquage du signal de synchronisation (S) par la station émettrice-réceptrice de base comporte plusieurs inversions de polarité des unités élémentaires de modulation correspondantes dans autant de trames consécutives (Fx, Fx+1, ... ), et la détection du signal de synchronisation marqué (S') comprend une détection cohérente de polarité en faisant la moyenne des polarités de plusieurs trames successives afin de réduire les erreurs potentielles.

5. La méthode selon la requête précédente **caractérisée par le fait que** le marquage du signal de synchronisation (S) par la station émettrice-réceptrice de base comporte plusieurs inversions de polarité des unités élémentaires de modulation correspondantes dans autant de trames consécutives (Fx, Fx+1, ... ), et la détection du signal de synchronisation marqué (S') comporte une détection de polarité incohérente en différenciant les polarités de deux trames successives.

6. La méthode selon une des requêtes précédentes **caractérisée par le fait que** le message de pointeur occupe une seule trame.

7. La méthode selon une des requêtes précédentes **caractérisée par le fait que** lesdits signaux radio comportent en plus des supertrames et le marquage du signal de synchronisation (S) par la station émettrice-réceptrice de base se reproduit avec une périodicité multiple de sa propre période de multitrame.

8. La méthode selon la requête précédente **caractérisée par le fait que** le décodage du message de pointeur (P) donne le numéro de la multitrame du début du message de système intéressant (M').

9. La méthode selon la requête 1 ou 2, **caractérisée par le fait que** le signal de synchronisation marqué (S') reste dans l'état marqué jusqu'à ce qu'il soit nécessaire d'indiquer la présence d'un autre message de pointeur (P) et que l'équipement utilisateur détecte les transitions d'état du signal de synchronisation marqué (S').

10. La méthode selon une des claims précédentes **caractérisée par le fait que** les messages de système (M) sont transmis en blocs comprenant une liste de bloc matrice et une description de tous les blocs actuellement utilisés dans la station émettrice-réceptrice de base et le message de pointeur (P) pointe sur le début dudit bloc matrice.

11. Le système pour synchroniser au moins un équipement utilisateur avec au moins une station émettrice-réceptrice de base appartenant à un réseau de télécommunication digitale dans lequel les signaux radio émis et captés par ladite base station sont subdivisés en multitrames et trames (Fx-1, Fx, Fx+1, ...) ayant une durée définie à l'avance et chaque trame est subdivisée en un nombre défini à l'avance d'intervalles de temps (T1, ..., Ti) et de codes (C1, ..., Cm) ; lesdits signaux comportent au moins un signal de synchronisation (S) qui est émis par la station émettrice-réceptrice de base et comprend une séquence d'unités élémentaires appropriées pour identifier les intervalles de temps (T1) et les codes (C1) d'un canal de service comprenant des messages de système (M), **caractérisés par le fait que** au moins une station émettrice-réceptrice de base est dotée de moyens appropriés pour :
• le marquage du signal de synchronisation (S) dans au moins une trame (Fx) pour indiquer à l'équipement utilisateur la présence d'un message de pointeur (P) dans le canal de service de la même trame (Fx) ou d'une trame successive dont la position (Fx+1) à l'intérieur de la multitrame est connue à l'avance ;
• l'émission du message releveur (P) dans le canal de service de la même trame (Fx) ou de ladite trame successive;
et au moins un équipement utilisateur est doté de moyens appropriés:
• détecter le signal de synchronisation marqué (S');
• capter le message de pointeur (P) indiqué par le signal de synchronisation détecté (S');
• decoder le message de pointeur (P) pour extraire au moins le numéro de la trame de début d'un message de système voulu (M').
marquer le signal de synchronisation (S) dans au moins une trame (Fx), et
transmettre un message de pointeur (P) dans le canal de service de cette trame (Fx) ou d'une trame postérieure (Fx+n).

12. Le système selon le claim précédent **caractérisé par** le fait de comporter une station émettrice-réceptrice de base supplémentaire appropriée pour détecter le signal de synchronisation marqué (S') et pour entrer en synchronisation dans une multitrame avec cette première station émettrice-réceptrice de base à travers ce signal de synchronisation marqué (S').
